# EUROPEAN PATENT APPLICATION

(11) **EP 1 902 868 A1**
(43) Date of publication of application: **26.03.2008**
(21) Application number: 06019793.6
(22) Date of filing: 21.09.2006
(51) Int. Cl.: B60C 11/24

(54) **Tire tread with colored inserts for indicating tread wear**

(71) Applicant: Chen, Po-Han, Da-an Taipei City 106 (TW)
(72) Inventor: Chen, Po-Han, Da-an Taipei City 106 (TW)
(74) Representative: Becker Kurig Straus

(57) **Abstract**

At least one alerting layer (221,222) of a different color than a tire surface (20) is divided into a rubber layer of the tire, in accordance with a safe abrasion condition of the tire, wherein a default distance of a lowest alerting layer to the tire surface is less than a depth of tire tread. Before the tire tread (21) is worn out, the alerting layer (221,222) of a default color will be emerged at a part of the tire that is abraded, due to a different extent of abrasion, which facilitates a consumer to check a degree of safety of the tire by oneself by a direct visualization method, and can prevent unworthy practicers to trick the consumer to replace the tire, while it has not achieved a standard of abrasion.

## Description

### BACKGROUND OF THE INVENTION

### (a) Field of the Invention

The present invention relates to an alerting structure for an abrasion of tire, and more particularly to an improvement to a rubber layer of tire so as to provide a consumer with a method of direct visualization to check a degree of safety of the tire by oneself, thereby facilitating a tire industry to enter a business of tire abrasion alerting structure of new safety concept and specification.

### (b) Description of the Prior Art

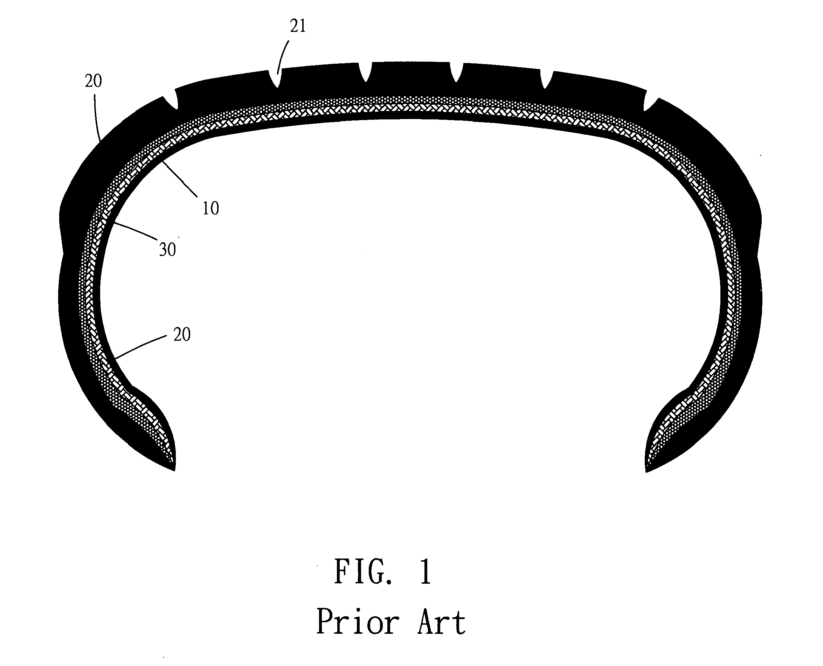

Referring to FIG. 1, it shows a cross sectional view of a conventional tire. An ordinary rubber tire comprises a primary shape of structure which is formed by hoping a tire layer 10, with rubber layers 20 being clad on an inner and outer circumference of the tire layer 10, respectively. According to different loading functions of the tire, the tire layer 10 can be made by steel wires or artificial wires such as nylon and the rubber material chosen for the rubber layers 20 are also dependent upon the variation of reaction forces to be sustained and functions at each part of the tire.

For example, as a tire surface of the tire is directly in contact with a road, the rubber material to be chosen should be equipped with a good resistance to abrasion and be provided with extremely good features of resistance to heat and prick at a same time. As for a sidewall of the tire, as it should be sustained with a larger mechanical deformation, the rubber material at the sidewall is preferable provided with lower yield strength, a good resistance to fatigue and ozone. For a part of the rubber layer 20 that is directly in contact with the tire layer 10, the rubber material to be chosen should be provided with higher strength, a resistance to fatigue and heat, and adhesiveness additionally, such that a buffer layer 30 is constituted between the rubber layer 20 and the tire layer 10.

On the other hand, a shoulder part between the tire surface and the sidewall of tire should be able to smoothly connect the hard tire surface to the soft sidewall, and transfer and absorb stress which is accumulated at the shoulder part under a moving condition to reduce a danger of emptiness of the shoulder part; therefore, the rubber material to be chosen should be provided with an excellent fatigue resistance and a good adhesiveness. In addition, it is in common to use a triangular rubber strip of a larger hardness or two triangular rubber strips of different hardness to reinforce the rim part of tire, such that the rim can be stably shaped.

Although each part of the tire is sustained to difference force and reaction, thus the rubber materials of different functions are required. However, as long as all kinds of additives are added into the raw materials of rubber basically, the rubber will be provided with the required features. In addition, the feature of rubber material at each part of the rubber tire for a different purpose is not exactly the same, even that it is not necessary to distinguish the rubber materials at the tire surface, sidewall, or shoulder. Accordingly, in the specification of present invention, the rubber layer structure at the tire surface, sidewall, and shoulder will be treated as a single "rubber layer 20."

In addition to that the rubber layer 20 of tire should be provided with the aforementioned features, the tire surface of rubber layer 20 should be made into tire treads 21 of the tire, for a largest purpose of expelling water accumulated on the tire, along with a facilitation for expelling sandstones or fine gravels, so as to increase a contact area of the tire with a ground, thereby acquiring a better grip. Therefore, a change of depth of the tire tread (from deep to shallow) will directly affect a driving of vehicles and can be used to determine whether a tire pressure is normal or whether the tire is perfectly aligned, through an observation that whether the tire treads of entire tire surface are abraded uniformly.

However, a conventional safety alerting mechanism for the tire only includes a triangular safety mark for the tire abrasion which is embedded in the tire surface of rubber layer, and a steering wheel should be turned to any side in general to check that whether the front tire treads have been abraded to the triangular safety mark for the tire abrasion, for checking whether the tire treads are still within an operable limit or for considering to replace the tire. For an ordinary consumer, he or she is not completely equipped with this kind of technology and related capability or common sense of determination; therefore, the tire will be overly abraded to incur a danger if it is still used. Moreover, there are unworthy practicers who will trick the consumer to replace with a new tire even when the tire is not abraded to the extend requiring the replacement, when the vehicle is subjected to maintenance.

### SUMMARY OF THE INVENTION

Accordingly, the present invention is to provide an improvement to the rubber layer structure of tire, wherein at least one alerting layer of a different color than the tire surface is divided into the rubber layer of tire in accordance with a safe abrasion condition of the tire. A default distance of the alerting layer to the tire surface is less than the depth of tire tread, and before the tire tread is worn out, the alerting layer of default color will be exposed out at the part of tire which is abraded, due to a different extent of abrasion.

Accordingly, it facilitates the consumer to check the degree of safety of the tire by oneself by a direct visualization method, can prevent unworthy practicers to trick the consumer to replace the tire while the tire has not achieved to a standard of abrasion, and can even present a used tire from being manufactured by retreading an old tire, so as to sharply decrease the used-tire markets and the used-tire consumer groups.

To enable a further understanding of the said objectives and the technological methods of the invention herein, the brief description of the drawings below is followed by the detailed description of the preferred embodiments.

### BRIEF DESCRIPTION OF THE DRAWINGS

FIG. 1 shows a cross sectional view of a conventional tire.
FIG. 2 shows a cross sectional view of a tire of the present invention.
FIG. 3 shows a schematic view of a tire of the present invention which is abraded.

### DETAILED DESCRIPTION OF THE PREFERRED EMBODIMENTS

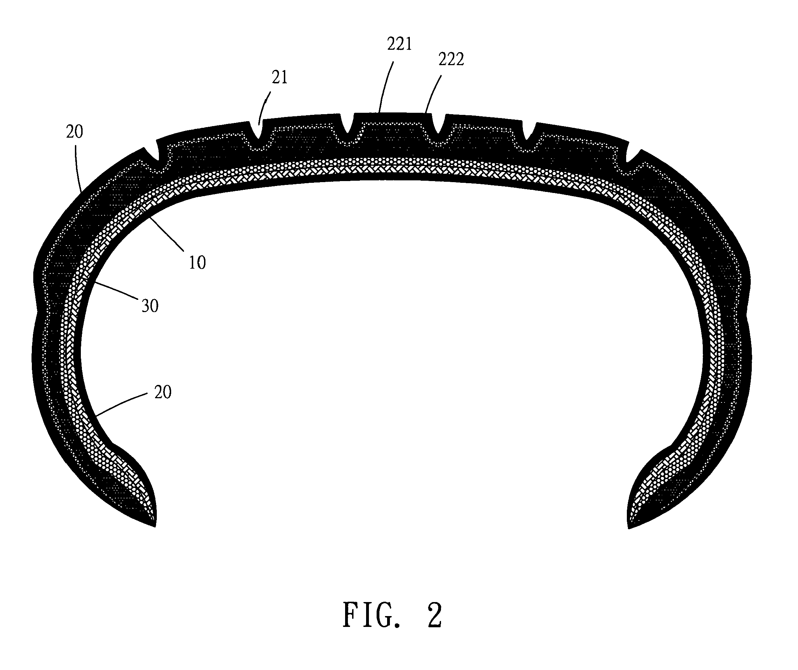

Referring to FIG. 2, an entire tire comprises primarily a tire layer 10 which is hoped into a primary structure, and rubber layers which are clad on an inner and outer circumference of the tire layer 10. The tire layer 10 can be optionally made by steel wires or artificial wires such as nylon, and the rubber material chosen for the rubber layers 20 are also dependent upon the variation of reaction forces to be sustained and functions at each part of the tire. In addition, all kinds of additives can be added into the raw material of rubber, such that the rubber can manifest the required features.

Furthermore, a tire surface of the rubber layer 20 is provided with tire treads 21 which can be used to expel water accumulated on the tire and to facilitate an expelling of sandstones or fine gravels, so as to increase a contact area of the tire with a ground, thereby acquiring a better grip. In a practical embodiment, a buffer layer 30 can be further formed at a position where the rubber layer 20 is in contact with the tire layer 10.

The essential feature of present invention is that at least one alerting layer of a different color than the tire surface is divided into the rubber layer 20 of tire, in accordance with a safe abrasion condition of the tire. In the embodiment, a first alerting layer 221 and a second alerting layer 222 are provided, wherein the two alerting layers (the first and second alerting layers 221, 222) are provided with different colors and depths respectively, and a default distance of the alerting layer to the tire surface is less than a depth of the tire tread 21.

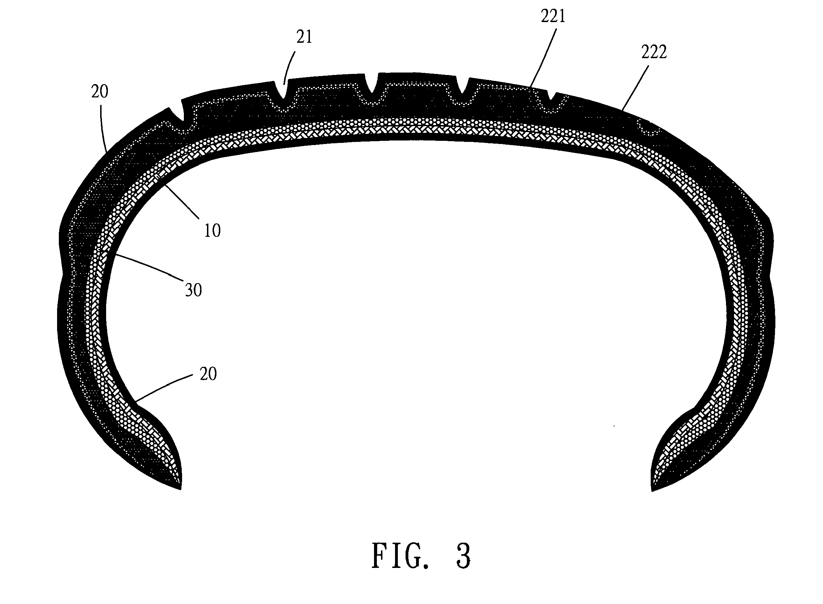

Accordingly, referring to FIG. 3, before the tire tread 21 is worn out, a the alerting layer of default color (the first and second alerting layers 221, 222) will be emerged at a part of the tire that is abraded, due to a different extent of abrasion, which facilitates a consumer to check a safety condition of the tire by oneself by a direct visualization method, such that the consumer can be warned that the tire has been broken to cause a danger, when the alerting layer is exposed if the tire surface is broken or burst out from a sharp object or nail on a road, and can prevent unworthy practicers to trick the consumer to replace the tire while it has not achieved a standard of abrasion.

In principle, the closer the alerting layer (such as the first alerting layer 221 shown in the drawing) is to the tire surface, the thinner the thickness is, enabling the consumer to recognize that shortly after an appearance of the first alerting layer (such as the first alerting layer 221 shown in the drawing), the second alerting layer (such as the second alerting layer 222 as shown in the drawing) will be exposed next. Therefore, it will facilitate a tire industry to enter into a business of new safety concept and specification, and will even prevent a used tire from being manufactured by retreading an old tire, so as to sharply decrease the used-tire markets and the used-tire consumer groups.

It is of course to be understood that the embodiments described herein is merely illustrative of the principles of the invention and that a wide variety of modifications thereto may be effected by persons skilled in the art without departing from the spirit and scope of the invention as set forth in the following claims.

## Claims

1. An alerting structure for an abrasion of tire comprising a tire layer which is hoped into a primary structure, and rubber layers which are clad on an inner and outer circumference of the tire layer, with a tire surface of the rubber layer being provided with tire treads; at least one alerting layer of a different color than the tire surface being divided into the rubber layer, such that before the tire treads are worn out, the alerting layer of the default color is emerged at a part of the tire that is abraded, due to a different extent of abrasion, thereby achieving a purpose of tire abrasion alert by using an explicit difference of color on the tire surface.

2. The alerting structure for an abrasion of tire according to claim 1, where the default distance of a lowest alerting layer to the tire surface is less than a depth of the tire tread.

3. The alerting structure for an abrasion of tire according to claim 1, wherein the each alerting layer is provided with a default thickness.
